# FASCICULE DE BREVET EUROPEEN

(11) **EP 0 549 467 B1**
(45) Date de publication et mention de la délivrance du brevet: **06.05.1998**
(21) Numéro de dépôt: 92403532.2
(22) Date de dépôt: 22.12.1992
(51) Int. Cl.: D06F 58/28, G05D 22/02, G08C 17/00, G08C 23/00, D06F 33/02

(54) **Système de commande d'arrêt d'un appareil sèche-linge**
Steuersystem zum Anhalten eines Wäschetrockners
Stop control system for a laundry dryer

(30) Priorité: 23.12.1991 FR 9116007
(43) Date de publication de la demande: 30.06.1993
(73) Titulaire: CROUZET APPLIANCE CONTROLS, F-26120 Montelier Chabeuil (FR)
(72) Inventeur: Astic, Georges, F-26320 Saint Marcel les Valence (FR); Passetchnick, Jacques, F-26200 Romans (FR)
(74) Mandataire: Geismar, Thierry

(56) Documents cités:
- DE-A- 2 166 284
- DE-A- 2 937 656
- DE-A- 3 342 301
- DE-A- 3 515 546
- DE-A- 4 031 981
- FR-A- 1 528 325
- FR-A- 1 564 923
- FR-A- 2 399 019
- MACHINE DESIGN. vol. 55, no. 27, Novembre 1983, CLEVELAND US page 38 'telemetry system keeps tabs on tire pressure'

## Description

La présente invention concerne un système de commande d'arrêt d'un appareil sèche-linge à tambour rotatif, et plus particulièrement un tel système comportant des moyens de mesure de la résistance électrique du linge.

On notera tout d'abord que l'on entend ici par "appareil sèche-linge" aussi bien un sèche-linge proprement dit dans lequel le linge est introduit mouillé exclusivement en vue de son séchage, qu'une machine lavante/séchante dans laquelle le linge est, au cours d'un même cycle, d'abord lavé puis séché.

Il est difficile dans de tels appareils à tambour rotatif d'accéder à la connaissance du niveau d'humidité du linge pendant le fonctionnement, afin d'arrêter le cycle à un niveau de séchage déterminé.

On peut remarquer en premier lieu que le degré d'humidité de l'air qui, lui, serait facile à mesurer n'est pas représentatif du niveau d'humidité du linge.

En effet, l'air conserve pendant pratiquement toute la durée du cycle de séchage un degré d'humidité constant qui ne chute brutalement que lorsque le linge est complètement sec. La mesure du degré d'humidité de l'air est par conséquent inutilisable lorsque l'on souhaite que le linge soit encore plus ou moins humide en fin de cycle, par exemple en vue d'un repassage ultérieur.

Il est donc nécessaire de mesurer l'humidité du linge lui-même, ce qui présente des difficultés du fait que ce linge est enfermé dans un tambour en rotation.

On a déjà proposé de mesurer l'humidité du linge par une mesure de sa résistance électrique et on a constaté qu'il existait une bonne corrélation entre ces deux grandeurs.

On a par conséquent déjà songé à placer dans le tambour rotatif une électrode isolée électriquement par rapport à la tôle du tambour, et à mesurer la résistance électrique existant entre cette électrode et le tambour lui-même lorsque le linge couvre cette électrode. A cet effet, on a réalisé un collecteur tournant sur l'axe du tambour à l'extérieur de celui-ci, et on a mesuré la résistance électrique entre le frotteur placé sur la bague collectrice et l'axe lui-même ou le tambour.

Si une telle solution est concevable sur des appareils de construction simple et de vitesse de rotation lente, par exemple de l'ordre de 50 tours/minute, elle n'est pas applicable sur les machines lavantes/séchantes, de construction beaucoup plus complexe et ayant des vitesses de rotation d'essorage très élevées de l'ordre de 1200 à 1500 tours/minute.

Dans ce dernier cas, le niveau de séchage est en conséquence fixé uniquement par une durée de cycle affichée au moyen d'une minuterie. Ce procédé est extrêmement imprécis car il ne permet pas de prendre en compte la nature du linge, la charge, et le niveau d'essorage qui a précédé l'opération de séchage.

Une solution visant à palier les inconvénients de l'art antérieur est décrite dans les documents FR-A-2 399 019 et FR-A-1 564 923, le premier de ces documents décrivant un dispositif selon le préambule de la revendication 1.

Dans ces documents, les moyens de mesure de la résistance électrique du linge sont logés à l'intérieur d'une enceinte placée dans le tambour rotatif, et l'information correspondante est communiquée à l'extérieur par couplage électromagnétique entre un enroulement primaire fixe et un enroulement secondaire tournant dans le circuit duquel est disposée l'électrode de mesure. L'enroulement secondaire est passif, l'ensemble se comportant comme un transformateur.

Cette solution s'est toutefois avérée fonctionner de façon peu satisfaisante, dans la mesure où les résultats étaient affectés aussi bien par l'épaisseur de l'entrefer, fonction de l'usure du matériel, que par l'humidité du linge.

La présente invention vise à palier ces inconvénients.

A cet effet, l'invention a pour objet un système de commande d'arrêt d'un appareil sèche-linge à tambour rotatif, selon la revendication 1.

L'enceinte est donc simplement placée dans le tambour avec le linge préalablement à la mise en marche de l'appareil.

L'invention permet par conséquent d'accéder par des moyens autonomes à la mesure de la résistance électrique du linge, et par conséquent à son niveau d'humidité, notamment dans le cas de machines lavantes/séchantes sans pour autant devoir utiliser de collecteur ou de transformateur tournant pour extraire l'information de l'intérieur du tambour rotatif.

Les moyens d'élaboration et de transmission peuvent être agencés pour élaborer et émettre à destination des moyens de réception un ordre d'arrêt lorsque la résistance électrique du linge dépasse le seuil prédéterminé.

Dans ce cas la comparaison entre la résistance électrique du linge telle que mesurée et la valeur de seuil est effectuée dans l'enceinte elle-même et ce n'est que lorsque la résistance mesurée atteint la valeur de seuil que les moyens de transmission donnent l'ordre d'arrêt à l'appareil.

Dans un autre mode de réalisation, lesdits moyens d'élaboration et de transmission sont agencés pour élaborer et émettre à destination des moyens de réception une information représentative de la résistance électrique du linge, et lesdits moyens de réception sont agencés pour comparer cette résistance audit seuil prédéterminé afin de générer un ordre d'arrêt lorsque la résistance électrique du linge dépasse ledit seuil.

Dans ce dernier cas, le traitement de l'information à l'intérieur de l'enceinte est limité à son minimum puisque la comparaison de la résistance mesurée avec le seuil est effectuée au niveau des moyens de réception qui élaborent eux-mêmes l'ordre d'arrêt.

On décrira maintenant à titre d'exemple non limitatif un mode de réalisation particulier de l'invention en référence aux dessins schématiques annexés dans lesquels :
- la figure 1 représente un appareil sèche-linge muni des moyens de l'invention,
- la figure 2 est une vue à plus grande échelle de l'enceinte selon l'invention,
- la figure 3 représente l'évolution de la résistance mesurée au cours d'un cycle de séchage, et
- la figure 4 est un schéma de l'électronique utilisée dans l'enceinte selon l'invention.

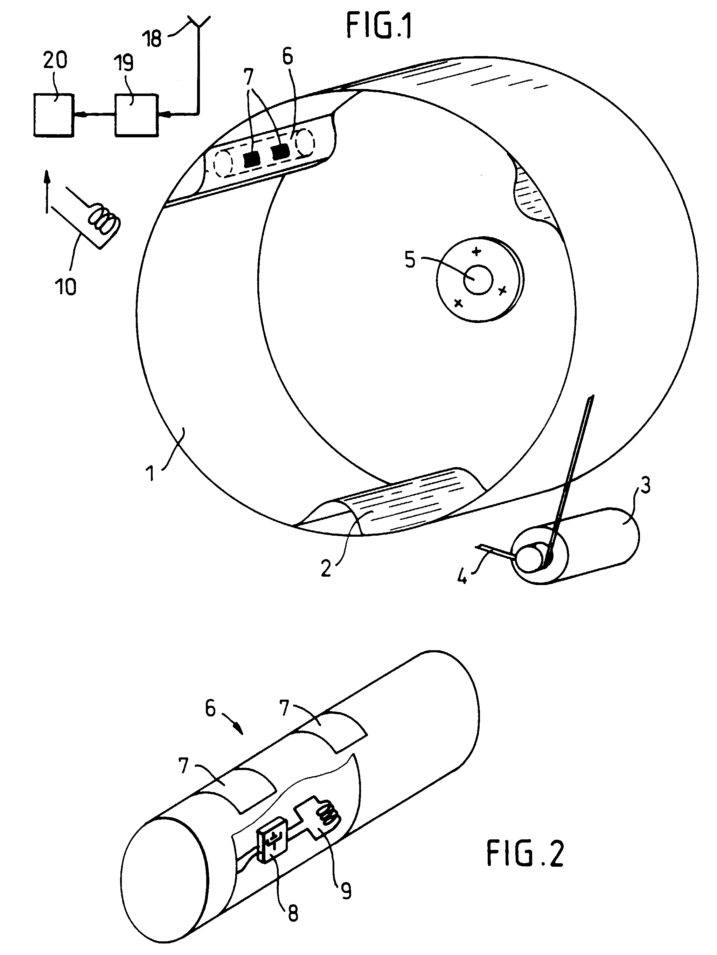

La figure 1 représente le tambour rotatif 1 à axe horizontal d'un appareil sèche linge. Ce tambour 1 est réalisé par exemple en tôle perforée et est pourvu à son intérieur de nervures 2 s'étendant axialement, par exemple en tôle soudée sur le tambour, permettant d'entraîner le linge vers le haut lors de la rotation du tambour.

Cette rotation est assurée à l'aide d'un moteur électrique 3 par l'intermédiaire d'une courroie d'entraînement 4. Afin de permettre cette rotation, le tambour est monté sur un arbre 5 fixé sur le fond du tambour opposé au hublot de chargement (non représenté).

A l'intérieur d'une des nervures 2 est montée par des moyens quelconques une enceinte étanche 6 présentant en surface deux électrodes de mesures 7. Le montage est tel que les électrodes 7 se trouvent en vis à vis d'ouvertures correspondantes dans la tôle de la nervure et affleurent ainsi à la surface intérieure du tambour 1.

L'enceinte 6 contient, outre les circuits de mesure et de transmission qui seront décrit ci-après, des moyens de génération électrique qui sont dans le cas présent constitués par un condensateur 8 chargé par couplage électro-magnétique entre une bobine 9 intérieure à l'enceinte et une bobine 10 fixe et extérieure au tambour produisant une impulsion de charge à chaque tour du tambour.

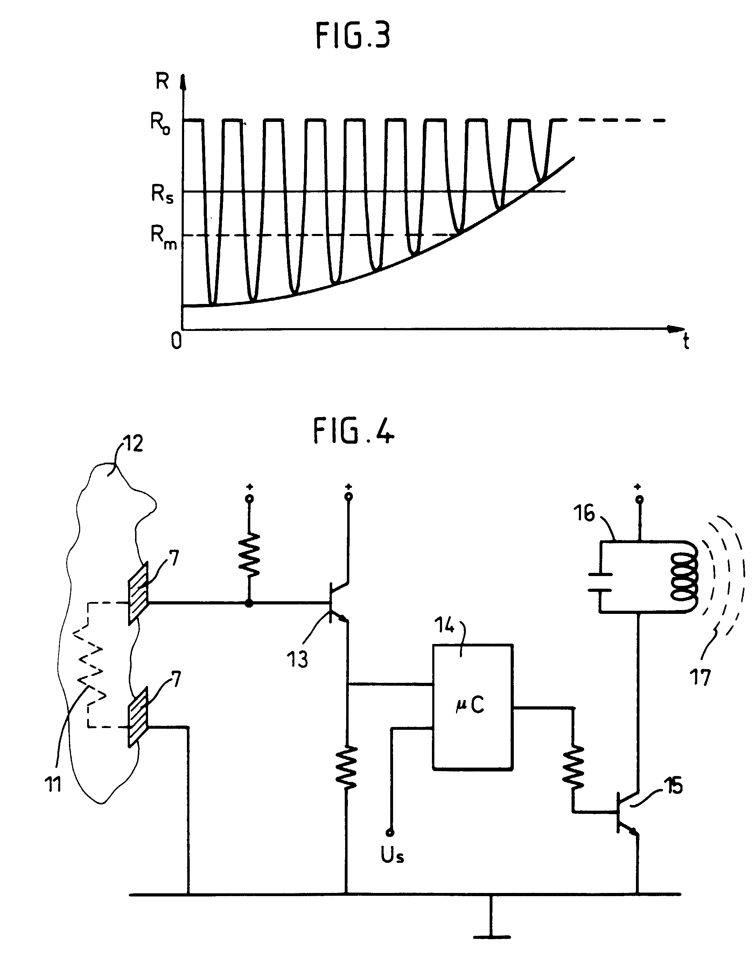

La figure 3 représente la variation de la résistance électrique mesurée entre les deux électrodes 7 au cours d'un cycle de séchage.

Cette résistance varie entre une valeur maximum R₀ observée en l'absence de linge sur les électrodes, en particulier lorsque l'enceinte 6 se trouve à la partie supérieure du tambour et des minima successifs Rₘ observés lorsque du linge couvre les électrodes 7, notamment lorsque l'enceinte 6 se trouve à la partie inférieure du tambour. Au cours d'un cycle de séchage, les minima Rₘ augmentent progressivement du fait de l'augmentation de la résistance électrique du linge au fur et à mesure de son séchage.

Il est donc possible en suivant l'évolution de la résistance Rₘ, de déterminer l'état de séchage du linge et, plus particulièrement, en comparant Rₘ à une valeur de seuil affichée Rₛ, de déterminer l'instant auquel l'appareil sèche-linge doit être arrêté, à savoir lorsque la valeur Rₘ devient supérieure à R_{S}.

La figure 4 montre les deux électrodes 7 reliées par une résistance 11 simulant la résistance électrique du linge 12 plaqué sur les électrodes 7.

L'une des électrodes 7 est reliée à la masse et l'autre est reliée à la base d'un transistor 13 monté en suiveur.

Les minima de tension à la sortie de l'émetteur du transistor 13 sont donc proportionnels à la valeur de la résistance 11, et par conséquent représentatifs du niveau d'humidité du linge 12.

Un micro-contrôleur 14 détecte et numérise ces minima, et les compare à une tension U_{S} représentative de la résistance de seuil R_{S} et par conséquent du niveau d'humidité souhaité à la fin du cycle de séchage.

Lorsque le niveau d'humidité souhaité est atteint, le micro-contrôleur émet un signal qui, amplifié par un transistor 15, provoque l'émission par un circuit oscillant 16 d'un signal électro-magnétique 17.

Le signal 17 est reçu par une antenne 18 solidaire du bâti de l'appareil, puis décodé et amplifié par un récepteur 19 dont la sortie agit sur le programmateur 20 de l'appareil pour provoquer l'arrêt de ce dernier.

On ne décrira pas plus en détail les moyens de codage et de décodage du signal 17, de tels moyens étant parfaitement connus et utilisés par exemple dans les dispositifs de verrouillage à distance des portières de véhicules automobiles.

Les moyens de génération électrique pourraient être remplacés, notamment dans le cas d'une enceinte 6 non solidaire du tambour, par une pile, un accumulateur rechargeable ou un condensateur de forte capacité chargé avant le cycle de travail.

Il serait également possible d'effectuer la comparaison de la mesure de l'humidité avec la valeur de seuil non pas au niveau du micro-contrôleur 14 mais au niveau d'un autre micro-contrôleur associé au récepteur 19.

## Revendications

1. Système de commande d'arrêt d'un appareil sèche-linge à tambour rotatif (1), comportant des moyens de mesure (7, 13) de la résistance électrique du linge logés dans au moins une enceinte (6) placée dans le tambour rotatif et des moyens (14) d'élaboration d'une information relative à la résistance électrique mesurée, caractérisé par le fait que ladite enceinte contient en outre des moyens (8, 9) de génération électrique, et des moyens (15, 16) de transmission radio-électriques à l'extérieur du tambour de ladite information sous forme codée, et que ledit système comprend des moyens radio-électriques de réception fixes (18, 19) pour recevoir ladite information et arrêter ledit appareil sèche-linge lorsque la résistance électrique du linge dépasse un seuil prédéterminé, ladite enceinte étant indépendante du tambour rotatif, mais apte à être placée dans ce tambour.

2. Système de commande selon la revendication 1, dans lequel lesdits moyens d'élaboration et de transmission sont agencés pour élaborer et émettre à destination des moyens de réception un ordre d'arrêt lorsque la résistance électrique du linge dépasse ledit seuil.

3. Système de commande selon l'une quelconque des revendications 1 et 2, dans lequel lesdits moyens d'élaboration et de transmission sont agencés pour élaborer et émettre à destination des moyens de réception une information représentative de la résistance électrique du linge, et lesdits moyens de réception sont agencés pour comparer cette résistance audit seuil prédéterminé afin de générer un ordre d'arrêt lorsque la résistance électrique du linge dépasse ledit seuil.

## Patentansprüche

1. Steuersystem zum Anhalten eines Wäschetrockners mit einer Drehtrommel (1), welches eine Meßeinrichtung (7, 13) für den elektrischen Widerstand der sich wenigstens in einem abgeschlossenen Raum (6) befindenden Wäsche aufweist, welche sich in der Drehtrommel befindet, und Erzeugungseinrichtungen (14) aufweist, welche eine Information bezüglich des gemessenen elektrischen Widerstandes erzeugen, **dadurch gekennzeichnet**, daß der abgeschlossene Raum ferner Einrichtungen (8, 9) zur elektrischen Stromerzeugung, und Einrichtungen (15, 16) zur drahtlosen Übertragung der Information in codierter Form von der Trommel nach außen umfaßt, und daß das System ferner drahtlose, feste Empfangseinrichtungen (18, 19) zum Empfangen der Informationen aufweist, welche den Wäschetrockner anhalten, wenn der elektrische Widerstand der Wäsche einen vorbestimmten Schwellenwert überschreitet, wobei der abgeschlossene Raum von der Drehtrommel unabhängig aber im Inneren der Trommel angeordnet ist.

2. Steuersystem nach Anspruch 1, bei dem die Einrichtungen zum Erzeugen und Übertragen derart ausgelegt sind, daß sie an den Bestimmungsort der Empfangseinrichtungen einen Stoppbefehl erzeugen und dort hin übertragen, wenn der elektrische Widerstand der Wäsche den Schwellenwert überschreitet.

3. Steuersystem nach einem der Ansprüche 1 oder 2, bei dem die Einrichtungen zum Erzeugen und Übertragen derart ausgelegt sind, daß eine Information erzeugt und an den Bestimmungsort der Empfangseinrichtung übertragen wird, welche den elektrischen Widerstand der Wäsche wiedergibt, und daß die Empfangseinrichtung derart betreibbar sind, daß sie den Widerstand mit dem Schwellenwert vergleichen, um einen Stoppbefehl zu erzeugen, wenn der elektrische Widerstand der Wäsche den Schwellenwert überschreitet.

## Claims

1. Stop control system for a laundry dryer with a rotary drum (1), comprising means (7, 13) for measuring the electrical resistance of the laundry, which means are housed in at least one enclosure (6) placed in the rotary drum and means (14) for processing information relating to the electrical resistance measured, characterised by the fact that said enclosure moreover contains electric generation means (8, 9) and radio-electric means (15, 16) for transmission to the outside of the drum of said information in a coded form, and that said system comprises fixed radio-electrical receiving means (18, 19) for receiving said information and stopping said laundry dryer when the electrical resistance of the laundry exceeds a predetermined threshold, said enclosure being independent of the rotary drum, but able to be placed in this drum.

2. Control system according to Claim 1, in which said processing and transmission means are arranged in order to process and transmit to the destination of the receiving means a stop command when the electrical resistance of the laundry exceeds said threshold.

3. Control system according to one of Claims 1 and 2, in which said processing and transmission means are arranged in order to process and transmit to the destination of the receiving means information representative of the electrical resistance of the laundry, and said receiving means are arranged to compare this resistance with said predetermined threshold in order to generate a stop command when the electrical resistance of the laundry exceeds said threshold.
